# EUROPEAN PATENT SPECIFICATION

(11) **EP 2 373 543 B1**
(45) Date of publication and mention of the grant of the patent: **08.07.2015**
(21) Application number: 08875770.3
(22) Date of filing: 05.12.2008
(51) Int. Cl.: B66F 11/04, B64F 5/00

(54) **DE-ICER FOR AIRPLANES**
ENTEISUNGSVORRICHTUNG FÜR FLUGZEUGE
DÉGIVREUR POUR AVIONS

(43) Date of publication of application: 12.10.2011
(73) Proprietor: VESTERGAARD COMPANY A/S, 4000 Roskilde (DK)
(72) Inventor: SVANEBJERG, Elo, DK-4733 Tappernoeje (DK)
(74) Representative: Budde Schou A/S
(86) International application number: PCT/IB2008/003367
(87) International publication number: WO 2010/064071

(56) References cited:
- US-A- 3 243 123
- US-A- 3 460 177
- US-A- 4 073 437
- US-A- 5 746 396

## Description

The present invention relates to de-icers for airplanes, comprising a vehicle provided with a lifting device in the form of an operator's platform mounted at the end of interconnected booms and capable of positioning the operator in the required positions for the de-icing operation.

In airports with winter conditions for all or part of the year, de-icers are required for the safety of air traffic. For the sake of safe take-offs, airplanes have to have their wing surfaces cleaned from ice and snow formations (de-icing) and immediately thereafter, the same wings have to be prepared (anti-icing) to protect them against new layers of precipitations such as snow and ice, to ensure that the airplanes have clean wings during take-off.

The de-icers are usually very large for servicing large aircraft in short period of time but at the expense of manoeuvrability. Smaller airplanes require smaller de-icing equipment with a fine tuned manoeuvrability coming primarily from a vehicle with a short wheelbase. Only if the vehicle has such manoeuvrability, the de-icing operations on especially smaller airplanes can be completed in a swift and timesaving manner.

A disadvantage of a de-icer vehicle having a short wheelbase is the question of ensuring, in use, a high level of stability when driving with the lifting gear in a raised position. Usually a de-icer vehicle with a low level of stability would require stabilization thereof, e.g. activated supporting legs while the lifting device is operated, possibly having one or two operators standing on the platform and thereby raising the centre of mass. The fact that the lifting device does not need to be lowered when changing position, means a lot in terms of timesaving.

In US 3,243,123, which is considered being the closest prior art and showing the features of the preamble of claim 1, is disclosed a de-icer, which comprises a self-propelled vehicle provided with a lifting device in the form of a boom having connected thereto a spraying platform via a connection mechanism maintaining a horizontal position of the platform floor. A spray gun is mountable on the platform and connected to a tank assembly including de-icing fluid tank, heating means for the fluids, and corresponding pump and piping connecting the pump and the spray gun. The boom is pivotally connected to the top of the rear part of the vehicle, which is standard for de-icers known in the art, because this configuration allows the de-icer to be used for de-icing larger aircrafts. However, this flexibility of facilitating de-icing of larger aircrafts comes at the expense of stability of the vehicle. When the boom is fully extended, the high placement of the pivot point has the effect that the centre of mass of the de-icer is high above the rear wheel axle, which can make it tip during operation and thereby causing damage to the aircraft to be de-iced and the operator in the platform.

A de-icer according to the invention as claimed in claim 1 does not have such disadvantages in that it comprises a self-propelled vehicle provided with a lifting device in the form of a first boom pivoting around a base-near pivot and being active in a longitudinal vertical plane forward of the pivot, said arm having connected thereto a spraying platform via a connection mechanism maintaining a horizontal position of the platform floor. A spray gun is mountable on the platform and connected to a tank assembly arranged substantially above and to the rear of the rear wheel axle, including de-icing and/or anti-icing fluid tanks, heating means for the fluids, and corresponding pumps and piping.

De-icers are normally seen with the pivot point of their boom being arranged on top of the vehicle in order to reach larger aircraft, while the de-icer according to the invention obtains a favourable stability by the boom pivot point and consequently also the centre of mass being near the base of the vehicle; in fact near the rear wheel axle.

Moreover, the tank assembly being centred above or near the rear axle likewise adds to the stability by the load thereof.

This stability feature also adds to the capability of precisely driving the de-icer around a target airplane, while the platform is manned, which is not recommended for prior art operator's platforms with a low level of stability.

According to another feature of the invention, the lifting device being constituted of a telescopic first boom and the platform also comprises a second boom arm connected to the platform at one end thereof and at the opposite end to the connection mechanism allowing the second boom arm a range of movement going ±90° relative to the longitudinal direction of the first boom. The mechanism is provided with levelling means maintaining the platform floor constantly in the horizontal position.

Further, the first boom moves between a 6 o'clock and a 10 o'clock position in a central vertical plane only, thereby avoiding an increase in lateral momentum, which could otherwise contribute to instability when the platform and the second boom arm swing away from said longitudinal direction.

A further feature is the provision of control devices on the platform for an onsite operator to take full control of the lifting device and the spraying installation, and according to still another feature, steering devices for driving the vehicle can be operated from the platform. One or two operators are able to run all operations from the platform.

Also, the de-icer has pumps and heating means being part of the tank assembly and arranged on one or either side of the pivot end of the first boom and thereby counterbalancing the load of the lifting device.

Furthermore, the de-icer has fluid tank(s) arranged to the rear of the rear axle, said tank(s) being part of the tank assembly and counterbalancing the load of the lifting device.

Furthermore, in another embodiment of the invention said two parts of the tank assembly have changed positions, whereby the balance of the de-icer is not negatively influenced by the decreasing level of fluid in the tanks concurrently with the ongoing spraying operation, because the tank(s) are positioned right above the wheel axle.

In another embodiment tanks have bottoms sloping away from the axle in a longitudinal direction of the vehicle, the configuration being such that the contribution to the momentum will be close to constant while dispensing the fluid.

The de-icer according to the invention addresses the need for equipment to service smaller airplanes in a swift manner by being able to manoeuvre nearby and around the airplanes due to a very modest turning radius and to the operability from the platform and in that way reducing the duration of the de-icing operation.

Use can be made of a standard self-propelled vehicle as a de-icer base, said vehicle having a wheeled base with a telescopic boom mounted low on the base and moving up and down in a vertical plane following the longitudinal centre line of the vehicle. Using a standard self-propelled vehicle as the backbone of the de-icer allows of considerable savings and cheaper sales prices for the benefit of the customers.

The invention will be better understood from the examples described in further details below and with reference to the drawings showing:
Fig. 1 a side view of a de-icer according to the invention, having a platform in different positions,
Fig. 2 a plan view of the de-icer of figure 1,
Fig. 3 a plan view of a second embodiment of a de-icer according to the invention, wherein the two parts of the tank assembly have changed positions, and
Fig. 4 a side view of the second embodiment of a de-icer according to the invention.

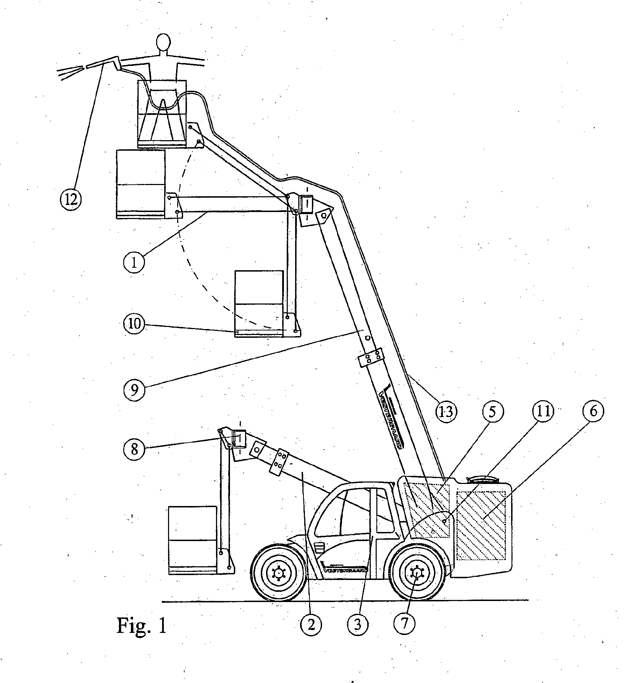

Fig. 1 shows a first embodiment of a de-icer according to the invention, wherein a self-propelled vehicle 3 having an operator's platform 10 attached to one end of a first boom arm 1, moves on wheels, whereof the rear wheel axle 7 is situated substantially beneath the pivot point (11) of a telescopic boom 2 having an extendible second boom arm 9. The free end of the second boom arm 9 is provided with a connection mechanism 8 connecting the boom arm 9 to an operator's platform 10 through the first boom arm 1.

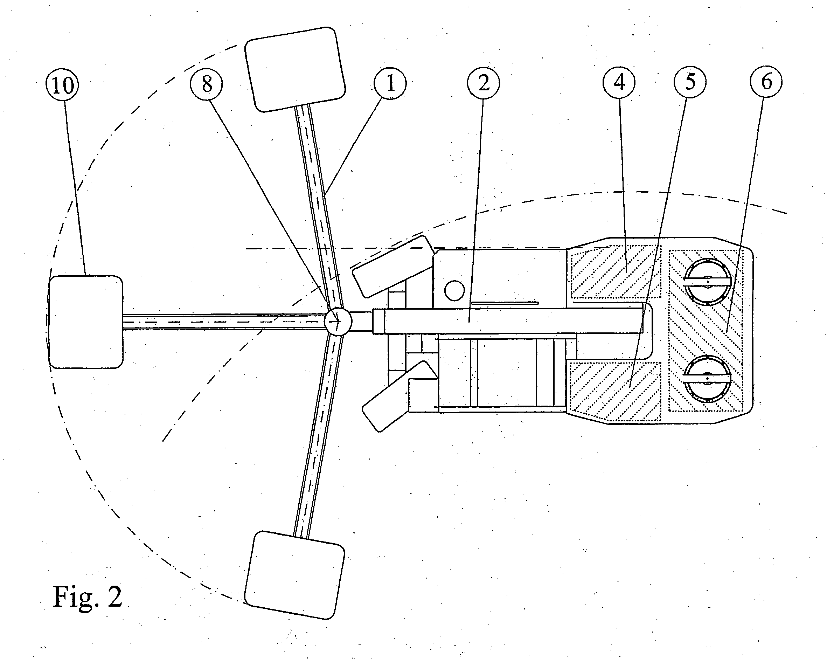

Moreover, as shown in fig. 1 and 2 the connection mechanism 8 includes levelling means to ensure a constantly horizontal position of the platform 10 for the operator(s) to work safely thereon. The connection mechanism 8 allows of the platform to be moved vertically to any position between a 6 o'clock and a 10 o'clock position relative thereto; and 90° to each side of the longitudinal direction of the boom 2, and consequently the vehicle 3. This makes it possible for a spraying operator to get very near to especially small airplanes and thereby performing an economical and efficient operation.

The platform 10 has enough work space for one or two operators with spray guns and has also control devices for full operation of the lifting device from the platform. Moreover, in an advantageous embodiment of the invention the platform is provided with control devices for the operators to drive the vehicle while standing on the platform 10, thereby saving valuable time.

In order to always ensure a high level of stability of the vehicle 3 the lifting device is counterbalanced by the load of the tank assembly being positioned in an optimal way relative to the rear axle 7.

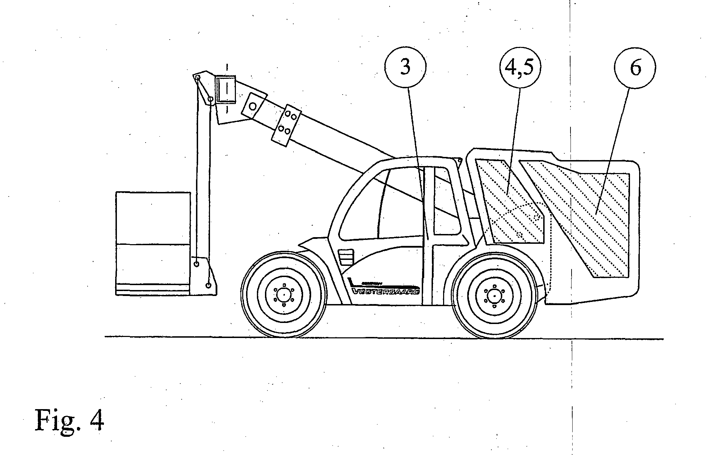

In one of the preferred embodiments (fig. 4) one part of the tank assembly, comprising heating means 4 and pumps 5, is arranged in a saddleback manner laterally of the pivot 11 end of the telescopic boom 2 and substantially above the rear axle 7, while a second part of the tank assembly comprising de-icing and/or anti-icing fluid tanks, is arranged to the rear of the rear axle 7.

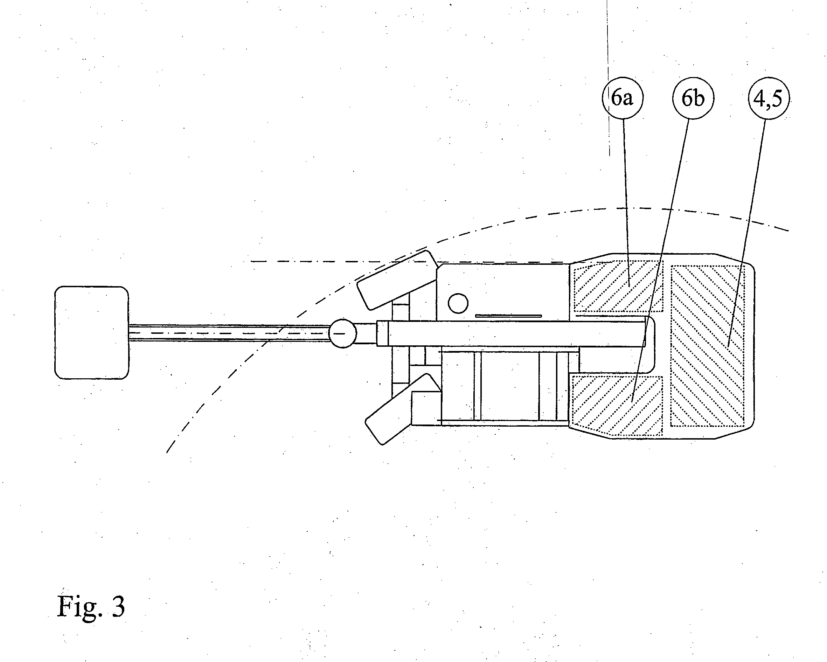

In another preferred embodiment (fig. 3) the two parts of the tank assembly are arranged in opposite position compared to the previous embodiment.

One way of fighting possible instability due to decreasing load of the contents of the tanks as the spraying operation is active can be having tanks formed with bottoms sloping away from the rear axle, whereby the momentum relative to the rear axle 7 is kept constant because the distance of the centre of mass from the rear axle increases as the mass (and level of fluid) decreases.

### Reference list

1. Second boom arm
2. First boom
3. Vehicle
4. Heating means
5. Pumps
6, 6a, 6b. Tank(s)
7. Rear wheel axle
8. Connection mechanism with vertical levelling mans
9. Second, extendible arm of the first boom 2
10. Platform
11. Pivot point
12. Spray gun
13. Piping

## Claims

1. De-icer for airplanes, comprising a self-propelled vehicle (3) provided with a lifting device in the form of a first boom (2), said boom (2) having connected thereto a spraying platform (10) via a connection mechanism (8) maintaining a horizontal position of the platform floor, whereby a spray gun (12) is mountable on the platform (10) and connected to a tank assembly (6) arranged adjacent to and to the rear of the rear wheel axle (7), including de-icing and/or anti-icing fluid tanks (6), heating means (4) for the fluids, and corresponding pumps (5) and piping (13) connecting the pumps (5) and the spray gun (12) **characterized in** by the first boom (2) pivoting around a base-near pivot (11) adjacent to the rear wheel axle (7) and being active in a longitudinal vertical plane forward of the pivot (11).

2. De-icer according to claim 1, wherein the lifting device constituted by the platform (10) and the first boom (2) having an extendible first boom arm (9) connected to the connection mechanism (8), allows the platform (10) to assume any vertical position between a 6 o'clock and a 10 o'clock position relative to the connection mechanism (8).

3. De-icer according to claim 1 or 2, wherein the platform (10) and a second boom arm (1) connecting the platform to the connection mechanism (8), are able to swing up to ±90° relative to the longitudinal direction of said first boom (2) in a horizontal plane.

4. De-icer according to any of the previous claims, wherein the connection mechanism (8) includes levelling means maintaining its swing axis constantly vertical.

5. De-icer according to any of the previous claims, the platform (10) having work space for one or two operators with spray guns (12), and having control devices for full operation of the lifting device and the spraying installation.

6. De-icer according to claim 5, the platform (10) further having steering devices for driving the vehicle (3).

7. De-icer according to any of the previous claims, the de-icer having pumps (5) and heating (4) means arranged on one or either side of the pivot end of the first boom (2), said means (4, 5) counterbalancing the load of the lifting device.

8. De-icer according to any of the previous claims, the de-icer having fluid tank(s) (6) arranged to the rear of the rear axle (7), said tank(s) (6) being part of the tank assembly and counterbalancing the load of the lifting device.

9. De-icer according to any of the claims 1 - 6, the de-icer having tanks (6a, 6b) arranged on one or either side of the pivot end of the first boom (2), said tanks (6a, 6b) thereby counterbalancing the load of the lifting device.

10. De-icer according to any of the claims 1 - 6, and 9, the de-icer having pumps (5) and heating means (4) arranged to the rear of the rear axle (7), said means (4, 5) being part of the tank assembly and counterbalancing the load of the lifting device.

11. De-icer according to claim 8, wherein the tank(s) (6) have bottom(s) sloping away from the axle (7) in a longitudinal direction of the vehicle (3).

## Patentansprüche

1. Enteisungsvorrichtung für Flugzeuge, umfassend ein Fahrzeug (3) mit Selbstantrieb, das mit einer Hebevorrichtung in Form eines ersten Auslegers (2) versehen ist, wobei der Ausleger (2) mit einer Sprühplattform (10) über einen Verbindungsmechanismus (8) verbunden ist, welcher eine horizontale Position des Plattformbodens aufrechterhält, wobei eine Sprühpistole (12) auf der Plattform (10) montierbar ist und mit einer Tankvorrichtung (6) verbunden ist, die benachbart zu und hinter der Hinterradachse (7) angeordnet ist, umfassend Enteisungs- und/oder Antivereisungsflüssigkeitstanks (6), Heizvorrichtungen (4) für die Flüssigkeiten und entsprechende Pumpen (5) und eine Rohrleitung (13), welche die Pumpen (5) und die Sprühpistole (12) verbindet, **dadurch gekennzeichnet, dass** der erste Ausleger (2) um ein bodennahes Drehgelenk (11) herum benachbart zu der Hinterradachse (7) schwenkt und in einer senkrechten Längsmittelebene vor dem Drehgelenk (11) tätig ist.

2. Enteisungsvorrichtung nach Anspruch 1, wobei die aus der Plattform (10) und dem ersten Ausleger (2) ausgebildeten Hebevorrichtung, welcher einen ausziehbaren ersten Auslegerarm (9) aufweist, der mit dem Verbindungsmechanismus (8) verbunden ist, es der Plattform (10) ermöglicht, jede vertikale Position zwischen 6 Uhr und einer 10 Uhr Position relativ zu dem Verbindungsmechanismus (8) einzunehmen.

3. Enteisungsvorrichtung nach Anspruch 1 oder 2, wobei die Plattform (10) und ein zweiter Auslegerarm (1), der die Plattform mit dem Verbindungsmechanismus (8) verbindet, in der Lage sind, bis zu ±90° relativ zu der Längsrichtung des ersten Auslegers (2) in einer Horizontalebene zu schwenken.

4. Enteisungsvorrichtung nach einem der vorherstehenden Ansprüche, wobei der Verbindungsmechanismus (8) Nivelliervorrichtungen umfasst, die seine Schwenkachse konstant vertikal aufrechterhalten.

5. Enteisungsvorrichtung nach einem der vorherstehenden Ansprüche, wobei die Plattform (10) Arbeitsraum für einen oder zwei Bediener mit Sprühpistolen (12) hat und Steuereinrichtungen zum vollen Betrieb der Hebevorrichtung und der Sprühanlage aufweist.

6. Enteisungsvorrichtung nach Anspruch 5, wobei die Plattform (10) ferner Lenkeinrichtungen zum Antreiben des Fahrzeugs (3) aufweist.

7. Enteisungsvorrichtung nach einem der vorherstehenden Ansprüche, wobei die Enteisungsvorrichtung Pumpen (5) und Heizvorrichtungen (4) aufweist, die auf der einen oder beiden Seiten des Drehgelenkendes des ersten Auslegers (2) angeordnet sind, wobei die Vorrichtungen (4, 5) die Last der Hebevorrichtung ausgleichen.

8. Enteisungsvorrichtung nach einem der vorherstehenden Ansprüche, wobei die Enteisungsvorrichtung Flüssigkeitstank(s) (6) aufweist, der/die hinter der Hinterachse (7) angeordnet ist/sind, wobei der/die Tanks (6) Teil der Tankanordnung ist/sind und die Last der Hebevorrichtung ausgleicht/ausgleichen.

9. Enteisungsvorrichtung nach einem der Ansprüche 1-6, wobei die Enteisungsvorrichtung Tanks (6a, 6b) aufweist, die auf der einen oder beiden Seiten des Drehgelenkendes des ersten Auslegers (2) angeordnet sind, wobei die Tanks (6a, 6b) dadurch die Last der Hebevorrichtung ausgleichen.

10. Enteisungsvorrichtung nach einem der Ansprüche 1-6 und 9, wobei die Enteisungsvorrichtung Pumpen (5) und Heizvorrichtungen (4) aufweist, die hinter der Hinterachse (7) angeordnet sind, wobei die Vorrichtungen (4, 5) Teil der Tankanordnung sind und die Last der Hebevorrichtung ausgleichen.

11. Enteisungsvorrichtung nach Anspruch 8, wobei der/die Tanks (6) Boden/Böden aufweist/aufweisen, der/die sich schräg von der Achse (7) weg in einer Längsrichtung des Fahrzeugs (3) erstreckt/erstrecken.

## Revendications

1. Dégivreur pour avions, comprenant un véhicule automoteur (3) fourni avec un dispositif de levage en forme d'une première flèche (2), ladite flèche (2) ayant une plate-forme de projection (10) par l'intermédiaire d'un mécanisme de bielle (8) qui maintient une position horizontale du sol de la plate-forme, par quel moyen un pistolet pulvérisateur (12) peut être monté sur la plate-forme (10) et lié à un assemblage de réservoir (6) disposé adjacent à l'arrière de l'arbre de la roue arrière (7), comportant des réservoirs de liquide de dégivrage et/ou d'antigivrage (6), des moyens de chauffage (4) pour les liquides, et des pompes (5) et de la tuyauterie (13) correspondants qui lient les pompes (5) et le pistolet pulvérisateur (12) **caractérisé en ce que** la première flèche (2) qui pivote autour d'un pivot près de la base (11) adjacent à l'arbre de roue arrière (7) et étant actif dans un plan vertical et longitudinal en avance du pivot (11).

2. Dégivreur selon la revendication 1, dans lequel le dispositif de levage, constitué par la plate-forme (10) et la première flèche (2) ayant un premier bras de flèche extensible (9) lié au mécanisme de bielle (8), permet à la plate-forme (10) d'assumer une quelconque position verticale entre une position de 6 heures et de 10 heures par rapport au mécanisme de bielle (8).

3. Dégivreur selon l'une des revendications 1 ou 2, dans lequel la plate-forme (10) et un deuxième bras de flèche (1) qui raccordent la plate-forme au mécanisme de bielle (8) sont capable d'osciller jusqu'à ±90° par rapport à la direction longitudinale de la première flèche (2) dans un plan horizontal.

4. Dégivreur selon l'une quelconque des revendications précédentes, dans lequel le mécanisme de bielle (8) comprend des moyens de nivelage qui maintiennent son axe d'oscillation constamment vertical.

5. Dégivreur selon l'une quelconque des revendications précédentes, la plate-forme (10) ayant de l'espace de travail pour un ou deux opérateurs avec des pistolets pulvérisateurs (12), et ayant des dispositifs de contrôle pour l'opération complète du dispositif de levage et l'installation de pulvérisation.

6. Dégivreur selon la revendication 5, la plate-forme (10) ayant en outre des dispositifs de direction du véhicule (3).

7. Dégivreur selon l'une quelconque des revendications précédentes, le dégivreur ayant des pompes (5) et des moyens de chauffage (4) arrangés sur l'un ou l'autre côté de l'extrémité du pivot de la première flèche (2), lesdits moyens (4, 5) contrebalançant la charge du dispositif de levage.

8. Dégivreur selon l'une quelconque des revendications précédentes, le dégivreur ayant des réservoirs liquides (6) disposés à l'arrière de l'axe arrière (7), lesdits réservoirs (6) faisant partie de l'assemblage de réservoir et contrebalançant la charge du dispositif de levage.

9. Dégivreur selon l'une quelconque des revendications 1 à 6, le dégivreur ayant des réservoirs (6a, 6b) disposés sur l'un ou l'autre côté de l'extrémité du pivot de la première flèche (2), lesdits réservoirs (6a, 6b) contrebalançant ainsi la charge du dispositif de levage.

10. Dégivreur selon l'une quelconque des revendications 1 à 6, et 9, le dégivreur ayant des pompes (5) et des moyens de chauffage (4) disposés à l'arrière de l'axe arrière (7), lesdits moyens (4, 5) faisant partie de l'assemblage de réservoir et contrebalançant la charge du dispositif de levage.

11. Dégivreur selon la revendication 8, dans lequel le(s) réservoir(s) (6) a/ont un fond qui est en pente à l'écart de l'axe (7) dans une direction longitudinale du véhicule (3).
